# EUROPEAN PATENT APPLICATION

(11) **EP 2 835 611 A1**
(43) Date of publication of application: **11.02.2015**
(21) Application number: 13768594.7
(22) Date of filing: 28.02.2013
(51) Int. Cl.: F28F 9/02

(54) **INTEGRATED COOLING SYSTEM**

(30) Priority: 30.03.2012 JP 2012081039; 30.03.2012 JP 2012081048
(71) Applicant: Calsonic Kansei Corporation, Saitama 331-8501 (JP)
(72) Inventor: MORI, Eiichi, Saitama-shi Saitama 331-8501 (JP); MATSUDAIRA, Norimitsu, Saitama-shi Saitama 331-8501 (JP)
(74) Representative: Grünecker, Kinkeldey, Stockmair & Schwanhäusser
(86) International application number: PCT/JP2013/055396
(87) International publication number: WO 2013/146071

(57) **Abstract**

[Summary]

[Task] To provide an integrated cooling system in which even when one of cooling mediums leaks into the other one of the cooling mediums, a damage of components of a cooling circuit operated with the other one of the cooling mediums is suppressed, and at the same time, a minimum cooling function of the cooling circuit is secured.

[Means for establishing Task] The integrated cooling system comprises a first cooling circuit EC including a first heat exchanger 6 that cools a first cooling medium by a core portion 6a arranged between an inlet tank 7 and an outlet tank 8; a second cooling circuit AC including a second heat exchanger 5 that is installed in the outlet tank to cool a second cooling medium by the first cooling medium, a pressure of the second cooling medium of the second heat exchanger being higher than that of the first cooling medium, in which at a lower side of the outlet tank 8, that is, at a position that can secure in the first cooling circuit a minimum necessary amount of the first cooling medium for functioning the first cooling circuit EC, there is provided a fragile portion that is broken when applied with a pressure equal to or larger than a predetermined level thereby to permit communication between the interior and the outside of the outlet tank 8.

## Description

### Technical Field:

The present invention relates to an integrated cooling system including a plurality of cooling devices that respectively use different cooling mediums and are arranged so that a cooling medium of one of the cooling devices can be cooled by another cooling medium of the other one of the cooling devices.

### Background Art:

As a hitherto used integrated cooling system, the system disclosed in Patent Document 1 has been known.

The hitherto used integrated cooling system comprises a first air-cooled heat exchanger (sub-radiator) that cools through cooling water heating elements such as electric motor and the like other than an engine of a motor vehicle and a second air-cooled heat exchanger (condenser) that cools a cooling medium used for air conditioning of the vehicle. A water-cooled heat exchanger is installed in an outlet tank of the sub-radiator, and after the cooling medium of the air conditioner is cooled by the cooling water circulating through the sub-radiator, the cooled cooling medium is led to the condenser.

### Prior Art Documents:

### Patent Document:

Patent Document 1: Japanese Laid-open Patent Application (Tokkai) 2010-127508

### Summary of Invention:

However, in the above-mentioned conventional integrated cooling system, the water-cooled heat exchanger is arranged in the sub-radiator and a high pressure cooling medium is forced to flow in the water-cooled heat exchanger, and thus, if a refrigerant gas leaks from the water-cooled heat exchanger to an interior of the sub-radiator, a heat exchanging efficiency of the sub-radiator is lowered and an internal pressure of the cooling circuit of the radiator side is increased resulting in that the sub-radiator and the components of the cooling circuit are damaged.

In order to prevent such defects, it is necessary to increase a liquid-tight performance of the water-cooled heat exchanger and a pressure-resistance performance of components of the cooling circuit of the sub-radiator side, and when it is intended to complete such necessity, the system becomes very expensive and increased in weight and size.

The present invention is provided by taking the above-mentioned drawbacks into consideration and aims to provide an integrated cooling system which comprises different cooling circuits operated with different cooling mediums that are cooled by two heat exchangers respectively provided by the cooling circuits, one of the cooling mediums being cooled by the other one of the cooling mediums, wherein even when one of the cooling mediums leaks into the other one of the cooling mediums, a damage of components of the cooling circuit operated with the other one of the cooling mediums is suppressed.

### Means for solving the problems:

In order to achieve the object, an integrated cooling system of the invention defined in Claim 1 is characterized by having:
a first cooling circuit including a first heat exchanger that cools a first cooling medium by a core portion arranged between an inlet tank and an outlet tank;
a second cooling circuit including a second heat exchanger that is installed in either one of the inlet and outlet tanks to cool a second cooling medium by the first cooling medium, a pressure of the second cooling medium of the second heat exchanger being higher than that of the first cooling medium; and
a communicating portion that is placed below the inlet tank or the outlet tank at a position that can secure in the first cooling circuit a minimum necessary amount of the first cooling medium, the communicating portion being able to permit a communication between an interior of either one of the inlet and outlet tanks and the outside of the same when an internal pressure of the communicating portion becomes to or larger than a predetermined pressure.

An integrated cooling system of the invention defined in Claim 2 is the integrated cooling system of Claim 1, which is further characterized in that the communicating portion is a relief valve.

An integrated cooling system of the invention defined in Claim 3 is the integrated cooling system of Claim 1, which is further characterized in that the communicating portion is a fragile portion.

An integrated cooling system of the invention defined in Claim 4 is the integrated cooling system of either one of Claims 1 to 3, which is further characterized in that the second heat exchanger is placed below the communicating portion.

An integrated cooling system of the invention defined in Claim 5 is the integrated cooling system of either one of Claims 1 to 4, which is further characterized in that the communicating portion is provided to a side surface of either one of the inlet and outlet tanks in a width direction of the first heat exchanger.

An integrated cooling system of the invention defined in Claim 6 is the integrated cooling system of either one of Claims 1 to 5, which is further characterized in that either one of the inlet and outlet tanks is provided with a guide member by which a direction in which the first cooling medium is discharged from the communicating portion to the outside is changed.

An integrated cooling system of the invention defined in Claim 7 is the integrated cooling system of Claim 1, which is further characterized by having a first abnormal leakage detecting sensor that detects a leakage of the second cooling medium to the first cooling medium, and an alarming device that gives the alarm when the abnormal leakage detecting sensor detects an abnormal leakage.

An integrated cooling system of the invention defined in Claim 8 is the integrated cooling system of Claim 7, which is further characterized in that the alarming device is one of a sound apparatus, a horn and an indicator.

An integrated cooling system of the invention defined in Claim 9 is the integrated cooling system of Claim 7 or 8, which is further characterized by having a second abnormal leakage detecting sensor that detects a leakage of the second cooling medium from the second cooling circuit, so that the second abnormal leakage detecting sensor detects the leakage of the second cooling medium, an alarm is given from the alarming device.

An integrated cooling system of the invention defined in Claim 10 is the integrated cooling system of Claim 9, which is further characterized in that the alarm given when the first abnormal leakage detecting sensor detects the leakage and the alarm given when the second abnormal leakage detecting sensor detects the leakage are made different.

An integrated cooling system of the invention defined in Claim 11 is the integrated cooling system of either one of Claims 1 to 10, which is further characterized in that the first cooling circuit is a cooling circuit for high power system components that uses cooling water as the first cooling medium and the second cooling circuit is a cooling circuit for air conditioning that uses a cooling medium for air conditioning as the second cooling medium.

### Advantages of the Invention:

In the integrated cooling system of the invention defined in Claim 1, even when the second cooling medium leaks to the first cooling medium, opening the communicating portion causes the first cooling medium existing above the communicating portion to be released to the outside thereby to reduce the pressure and thus components of the first cooling circuit operated with the first cooling medium are prevented from damage. Furthermore, since a certain amount of the first cooling medium is secured at a partial position below the communicating portion, the minimum cooling function at the first cooling circuit can be secured. Furthermore, since the second heat exchanger is provided in either one of the inlet and outlet tanks of the first heat exchanger, a heat exchanging efficiency at the second heat exchanger can be increased.

In the integrated cooling system of the invention defined in Claim 2, the communicating portion is constructed of a relief valve, and thus, undesired matter in which, due to leakage of the second cooling medium to the first cooling medium, the pressure of the cooling medium is increased higher than a predetermined value can be completely suppressed.

In the integrated cooling system of the invention defined in Claim 3, the communicating portion is made fragile, and thus, undesired matter in which, due to leakage of the second cooling medium to the first cooling medium, the pressure of the cooling medium is increased higher than the predetermined value can be assuredly and inexpensively suppressed.

In the integrated cooling system of the invention defined in Claim 4, the second heat exchanger is placed below the communicating portion, and thus, even when the second cooling medium leaks to the first cooling medium, the second cooling medium can be sufficiently cooled by the second heat exchanger for the time in which the second cooling medium remained in the second cooling circuit keeps such an amount as to exhibit cooling function at the second cooling circuit.

In the integrated cooling system of the invention defined in Claim 5, the communicating portion is connected to the side surface in the width direction of the first heat exchanger, and thus, when the communicating portion is opened, an action of directing or turning the direction in which the first cooling medium is discharged to the outside to the width direction of the first heat exchanger can bring about prevention of undesired matter in which the first cooling medium is applied to other components that are placed at front and rear positions of the first heat exchanger.

In the integrated cooling system of the invention defined in Claim 6, there is provided the guide member by which the direction in which the first cooling medium is discharged from the communicating portion to the outside is changed, and thus, it is possible to change the direction in which the first cooling medium is discharged from the communicating portion to the outside from the width direction of the first heat exchanger to a thickness direction of the first heat exchanger.

In the integrated cooling system of the invention defined in Claim 7, when the second cooling medium leaks to the first cooling medium, the leakage of the second cooling medium to the first cooling medium is detected by the first abnormal leakage detecting sensor causing the alarming device to give an alarm, so that users are able to realize the abnormal condition.

In the integrated cooling system of the invention defined in Claim 8, the abnormal condition can be easily realized by the users with usage of sound and light as the alarm. Furthermore, in case where the integrated cooling system is of a type that is to be mounted on a motor vehicle, a corresponding part mounted on the vehicle can be used as the alarming device.

In the integrated cooling system of the invention defined in Claim 9, not only the alarm produced when the second cooling medium leaks to the first cooling medium, but also an alarm produced when the second cooling medium leaks from another portion of the second cooling circuit can be given to the users through the alarming device.

In the integrated cooling system of the invention defined in Claim 10, by differentiating the sound produced when the second cooling medium leaks to the first cooling medium and the sound produced when the second cooling medium leaks from another portion of the second cooling circuit, the users can understand which leakage is taking place.

In the integrated cooling system of the invention defined in Claim 11, the system can be optimally used as an air conditioning system for hybrid vehicles and electric vehicles and as a cooling system for high power system components.

### Brief description of Drawings:

Fig. 1 is a plan view showing an entire construction of an integrated cooling system of a first embodiment of the present invention.
Fig. 2 is a sectional view of an outlet tank of a sub-radiator that installs therein a water-cooled heat exchanger that is an essential element of the integrated cooling system of the first embodiment.
Fig. 3 is a perspective view of a modified example of a guide member used in the integrated cooling system of the first embodiment.

### Best Mode Embodiments of the Invention:

In the following, embodiments of the present invention will be described in detail with reference to the embodiments shown in the accompanying drawings.

### First Embodiment:

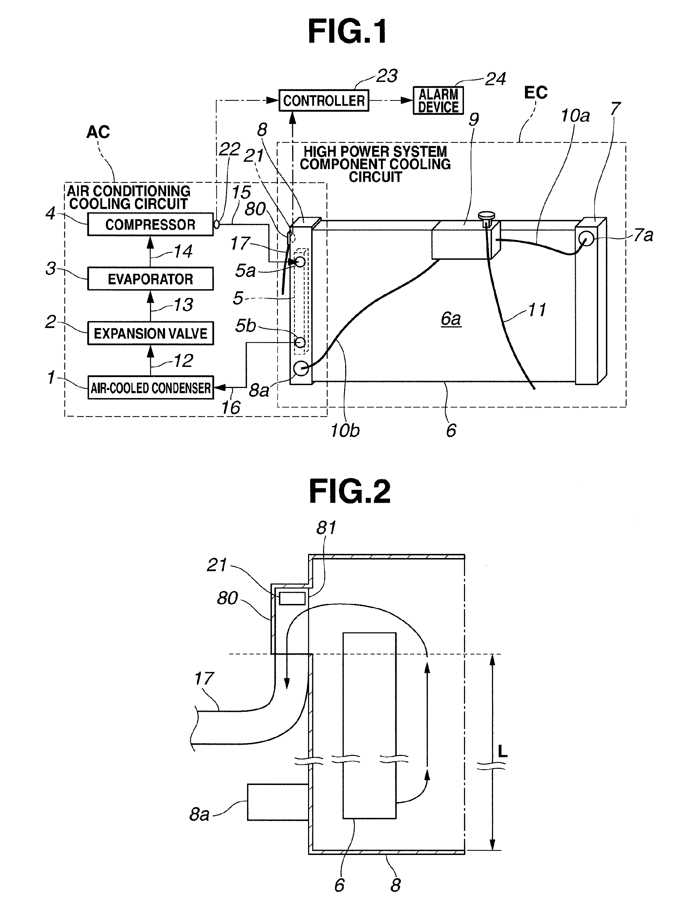

First, an entire construction of the integrated cooling system of the first embodiment will be described in the following with reference to Fig. 1. The integrated cooling system of the first embodiment is of a type that is applicable to a hybrid motor vehicle mounting thereon both an internal combustion engine and an electric motor and able to run by operating one or both of them.

The integrated cooling system of the first embodiment comprises an air conditioner cooling circuit AC for a cooling medium of an air conditioning system and a high power component cooling circuit EC that cools high power components such as electric motor, inverters and the like. The air conditioner cooling circuit AC and the high power component cooling circuit EC are integrated so that respective cooling mediums of the circuits carry out heat exchange therebetween at a water-cooled condenser 5. It is to be noted that the high power component cooling circuit EC corresponds to a first cooling circuit of the invention and the air conditioner cooling circuit AC corresponds to a second cooling circuit of the invention.

The air conditioner cooling circuit AC comprises an air-cooled condenser 1, an expansion valve 2, an evaporator 3, a compressor 4, a water-cooled condenser 5 and a passage like a pipe that connects between these members. As a cooling medium that flows in and through these members, HFC-134a (chemical formula: CH₂FCF₃) is used for example. The flowing direction of the cooling medium is indicated by arrows in Fig. 1. The air-cooled condenser 1 constitutes part of the high power component cooling circuit EC, and the above-mentioned cooling medium HFC-134a corresponds to a second cooling medium of the invention.

The air-cooled condenser 1 comprises inlet and outlet tanks that are spaced from each other and a core portion including a plurality of tubes (or alternately arranged tubes and cooling fins) extending between the inlet and outlet tanks. The cooling medium discharged from the inlet tank is subjected to a heat exchanging with a travelling wind (or a forced air flow by a motor fan at the time when the vehicle is at a standstill) during the time for which the cooling medium flows in the core portion toward the outlet tank, and thus the cooling medium is cooled. The cooling medium thus cooled by the air flow flows to the expansion valve 2 through a passage 12.

The expansion valve 2 functions to reduce the pressure of the cooling medium that has been cooled by the air-cooled condenser 1 and thus become super-cooled, and when the expansion valve is tightened, the cooling medium becomes a misty medium with low temperature and low pressure, which is easily evaporated. The cooling medium thus evaporated is led to the evaporator 3 through a passage 13.

The evaporator 3 is installed in an air flow duct of an air conditioner unit (not shown in the drawings) arranged in a vehicle cabin, which functions to evaporate the low temperature low pressure cooling medium, which has been subjected to a decompression/expansion by the expansion valve 2, with the aid of air flow produced by an air blower, so that the air flowing in the air flow duct toward the vehicle cabin is cooled. The cooling medium discharged from the evaporator 3 is led to an inlet of the compressor 4 through a passage 14.

The compressor 4 is a device for compressing the cooling medium sent from the evaporator 3 thereby producing a highly pressurized cooling medium. For example, the compressor is a variable displacement compressor of which discharge capacity is varied (several % to 100 %) in accordance with a capacity control signal outputted from a control (not shown) to a capacity control electromagnetic valve (not shown). The compressor 4 is belt-driven by an electric motor (not shown) through an electromagnetic clutch or direct pulley (without clutch) of which drawing is omitted. The cooling medium discharged from an outlet of the compressor 4 is let to an inlet of the water-cooled condenser 5 through a passage 15.

The water-cooled condenser 5 is installed in the outlet tank 8, and the condenser 5 takes the cooling medium from its upper side and discharges the same from its lower side. Due to this upper to down flowing of the cooling medium and a flow of cooling water of the high power component cooling circuit EC in the outlet tank 8 along a peripheral wall of the tank, a heat exchanging is carried out between the cooling medium and the cooling water, so that the cooling medium can be cooled. The cooling medium discharged from the water-cooled condenser 5 is returned back to the air-cooled condenser 1 through a passage 16. The water-cooled condenser 5 corresponds to a second heat exchanger of the present invention.

Although not shown in the drawing, between the air-cooled condenser 1 and the expansion valve 2, there may be provided a liquid tank for not only removing by a filter moisture and dusts that would be contained in a high pressure middle temperature liquefied refrigerant that has been liquefied by the air-cooled condenser 1 but also temporarily accumulating excess refrigerant to allow feeding of sufficient amount of cooling medium upon need of rapid cooling.

While, the high power component cooling circuit EC comprises the water-cooled condenser 5, the sub-radiator 6, a high power component cooling portion (not shown), and a flow passage such as pipe or the like that connects between these members to allow cooling water to flow through these members. The above-mentioned sub-radiator 6 corresponds to a first heat exchanger of the present invention and the above-mentioned cooling water corresponds to a first cooling medium of the present invention.

As is mentioned hereinabove, the water-cooled condenser 5 is able to cool the cooling medium flowing in the air conditioner cooling circuit AC by the cooling water flowing in the high power component cooling circuit EC. The cooling water discharged from the water-cooled condenser 5 is led to the high power component cooling portion 7 through the passage.

The sub-radiator 6 is placed in the vicinity of a main radiator for the internal combustion engine and comprises mutually spaced inlet and outlet tanks 7 and 8 of resin and a core portion 6a that includes a plurality of tubes connecting the tanks 7 and 8 and cooling fins arranged between neighboring tubes. The cooling water is led into inlet tank 7 from an inlet port 7a provided at an upper side of the inlet tank 7 and allowed to flow through the core portion 6a and discharged from an outlet port 8a provided at a lower side of the outlet tank 8.

At an upper portion of the sub-radiator 6, there is provided a degassing tank 9. The degassing tank 9 has at its upper surface a pressure cap and is connected through a pipe 10a to the inlet port 7a of the inlet tank 7 and connected through a pipe 10b to the outlet port 8a of the outlet tank 8, so that the degassing tank 9 functions to collect and accumulate therein air and gases that would be in the cooling water and thereafter discharge such air and gases to the outside. In the degassing tank, there is received the cooling water. That is, the degassing tank selectively charges and discharges the cooling water in accordance with the amount of the cooling water that circulates through the high power component cooling circuit EC. Designated by numeral 11 in Fig. 1 is an overflow pipe through which excessive part of the cooling water is discharged to the outside.

As is seen from Fig. 2, at an outer upper position of the outlet tank 8 of the sub-radiator 6, there are provided a fragile portion 80 of which thickness is smaller than that of other portions and a guide member 81 that is provided at an outer wall of the fragile portion 80 and opened downward. The guide member 81 is equipped with a discharge pipe 17. The above-mentioned fragile portion 80 corresponds to a communicating portion of the present invention.

If the cooling refrigerant leaks into the cooling water, the fragile portion 80 becomes broken upon sensing an internal pressure of the high power component cooling circuit EC exceeding a predetermined value for preventing breakage of components of the high power component cooling circuit EC due to increase in pressure of the circuit caused by expansion of the cooling refrigerant. A rupture strength of the fragile portion 80 is set so that upon breakage of the fragile portion 80, the cooling water and part of the cooling refrigerant are discharged to the outside from a side upper portion of the outlet tank 8 through the guide member 81.

A distance L from a bottom surface of the outlet tank 8 to a lower end of the fragile portion 80 is set so that even if part of the cooling water is discharged to the outside due to breakage of the fragile portion 80, the cooling water left in a space defined between the bottom surface of the outlet tank 8 and the lower end of the fragile portion 80 can show a volume that is minimum necessary to function the high power component cooling circuit EC.

During the time while the cooling water thus warmed in the high power component cooling circuit EC is forced to flow in the core portion 6a from the inlet tank 7 toward the outlet tank 8, the cooling water is subjected to a heat exchange with a travelling wind (or a forced air flow by a motor fan at the time when the vehicle is at a standstill) and led to the water-cooled condenser 5.

It is to be noted that the high power component cooling portion comprises a cooling passage formed in a case of the electric motor, a cooling passage formed in a bottom portion of a case of an inverter and the like. By forcing the cooling water cooled by the sub-radiator 6 to flow in such cooling passages, a heat produced by high power components such as the electric motor, the inverter and the like is removed thereby to cool such high power components. The cooling water thus warmed by cooling such high power components is led to the sub-radiator 6 through the passage.

The above-mentioned fragile portion 80 is provided with a proximity sensor 21, and when the fragile portion 80 is broken, the sensor senses the breakage and sends a corresponding information signal to a controller 23. The proximity sensor 21 corresponds to a first abnormal leakage detecting sensor of the present invention. At an outlet side of the compressor 4, there is provided a temperature sensor 22 that senses a temperature of the cooling refrigerant in the outlet side and sends a corresponding information signal to the controller 23. The temperature sensor 22 corresponds to a second abnormal leakage detecting sensor of the present invention.

Based on the information signals from the proximity sensor 21 and the temperature sensor 22, the controller 23 carries out both a judgment as to whether a leakage of the cooling medium takes place at any portion of the air conditioning cooling circuit AC or not and a judgment as to whether a leakage of the cooling medium from the air conditioning cooling circuit AC to the cooling water of the high power component cooling circuit EC takes place or not and sends an alarm signal to an alarming device 24 upon judgment of the leakage. The alarming device is at least one of a sound apparatus, a horn and an indicator of the vehicle, and lets users know an abnormal condition of the cooling circuits with the aid of acoustic sound or light upon receiving an alarm signal from the controller 23.

Operation of the integrated cooling system having the above-mentioned construction will be described in the following.

In the air conditioning cooling circuit AC, the cooling medium is cooled by the air-cooled condenser 1 to become into a super-cooled condition, and then the super-cooled cooling medium is led to the expansion valve 2 through the passage 12. Upon this, at the expansion valve 2, by tightening the valve 2 for reducing the pressure of the super-cooled cooling medium, the cooling medium becomes a misty medium with lower temperature and lower pressure, which is easily evaporated. The cooling medium thus evaporated is led to the evaporator 3 through the passage 13, and there, the lower temperature lower pressure cooling medium, which is produced by passing through the expansion valve 2 and thus decompressed and expanded, is evaporated due to the air flow produced by the air blower, and by using the cooling medium thus cooled, the air flowing in the air flow duct toward the vehicle cabin is cooled thereby to cool the vehicle cabin. The cooling medium thus warmed as a result of heat exchanging at the evaporator 3 is led to the compressor 4 through the passage 14.

After being compressed and thus highly pressurized (thus, also the temperature is increased) by the compressor 4, the cooling medium is led to the water-cooled condenser 5 through the passage and a first switching valve V1. When passing through the water-cooled condenser 5, the cooling medium carries out a heat exchanging with the cooling water of the high power component cooling circuit EC thereby to be cooled, and then the cooling medium is passed through the passage 16 and then cooled further at the air-cooled condenser 1 and thereafter led to the expansion valve 2 through the passage 12. In this manner, the cooling medium is circulated in the air conditioning cooling circuit AC.

While, in the high power component cooling circuit EC, the cooling water thus warmed by cooling the high power components such as the electric motor, the inverter and the like at the high power component cooling portion is led to the sub-radiator 6 through the passages, and after being air-cooled by the sub-radiator 6, the cooling water is led to the water-cooled condenser 5 through the passage. At the water-cooled condenser 5, a heat exchanging is carried out between the lower temperature cooling water cooled by the sub-radiator 6 and the cooling medium that is led to the water-cooled condenser 5 from the compressor 4 of the air conditioning cooling circuit AC, and after being cooled by the cooling water, the cooling medium is led to the high power component cooling portion through the passage. Although the cooling water is warmed at the water-cooled condenser 5, the temperature possessed by the cooling water is sufficiently low to cool the high power components and thus it is returned to the sub-radiator 6 through the passage after cooling the high power components. In the above-mentioned manner, the cooling water is circulated through the high power component cooling circuit EC.

The operation mentioned hereinabove is an operation carried out in a normal condition. While, if the cooling medium happens to leak from the air conditioning cooling circuit AC to the outside, the temperature of the cooling medium in the outlet side of the compressor 4 is lowered and thus, the controller 23 detects and judges the leakage from the temperature change of the cooling medium. As a result, the alarming device 24 is operated letting the users know the alarm. It is to be noted that the leakage detection is carried out when the leakage takes place at any portion of the air conditioning cooling circuit AC. If, upon occurrence of the leakage, the cooling medium is suppressed from leaking into the cooling water in the high power component cooling circuit EC, the proximity sensor 21 does not operate, and undesired phenomenon in which the internal pressure of the high power component cooling circuit EC shows an abnormal expansion does not occur.

While, if some portions placed in the outlet tank 8 of the air conditioning cooling circuit AC is broken, that is, if some portions of inlet and outlet pipes which are connected to the water-cooled condenser 5 and placed in the outlet tank 8 are broken thereby causing a leakage of the cooling medium to the cooling water, the cooling medium starts to evaporate thereby increasing the internal pressure of the high power component cooling circuit EC. When the internal pressure becomes to a predetermined level, the fragile portion 80 of the outlet tank 8 that forms part of the high power component cooling circuit EC and has the lowest strength is broken.

When the fragile portion 80 is broken, the cooling water placed at a position upper than the lower end of the fragile portion is discharged to the outside from the opening of the outside surface of the outlet tank 8 through the guide member 81. The discharging direction in this case is an outside direction with respect to the width of the sub-radiator 6, so that the discharged cooling water is suppressed from hitting parts mounted on the vehicle.

Due to the above-mentioned partial discharging of the cooling water, the increase of the internal pressure of the high power component cooling circuit EC is suppressed and thus, undesired damage or breakage of components of the high power component cooling circuit EC can be avoided. Since the cooling water placed at a position lower than the lower end (viz., placed at the position away from the bottom by the distance L) of the fragile portion 80 is not discharged, the amount of the cooling water that is sufficient for functioning the high power component cooling circuit EC can be secured. Accordingly, even when the air conditioning cooling circuit AC fails to operate, the minimum cooling function of the high power component cooling circuit EC is secured and thus the high power components are kept cooled.

It is to be noted that the cooling medium having leaked to the cooling water is almost evaporated with some part remained above the fragile portion 80 of the outlet tank 8 and the other part discharged to the outside from the guide member 81 through the fragile portion 80.

If the fragile portion 80 is broken, the breakage is detected by the proximity sensor 21 and a corresponding information signal is sent to the controller 23. Upon this, the controller 23 judges that the cooling medium has leaked into the cooling water by processing the information signal, and sends an alarm signal to the alarming device 24. With this, the alarming device 24 carries out alarming with usage of sound or light, letting the users realize abnormal condition. If possible, the alarming produced by the alarming device 24 in the above-mentioned abnormal condition may be different from that produced when a leakage of other portions takes place.

As will be understood from the above, the integrated cooling system of the present invention has the following advantages.

In the integrated cooling system of the embodiment, the water-cooled condenser 5 is installed in the outlet tank 8 of the sub-radiator 6 and the fragile portion 80 is provided at such a position as to secure a volume of the cooling water that is larger than the minimum volume needed by the high power component cooling circuit EC. With such arrangement, if the cooling medium of the air conditioning cooling circuit AC leaks to the cooling water of the high power component cooling circuit EC in the outlet tank 8 of the sub-radiator 6 inducing evaporation of the cooling medium thereby to increase the internal pressure of the outlet tank 8, the fragile portion 80 provided at the upper position of the outlet tank 8 is damaged and thus the leaked cooling medium is discharged to the outside together with the cooling water placed above the lower end of the fragile portion 80.

In this case, the cooling water placed below the lower end of the fragile portion 80 is suppressed from discharging to the outside, and thus, an amount of the cooling water needed for minimally functioning the high power component cooling circuit EC is secured. Thus, cooling of the high power components, such as an electric motor, inverter, battery and the like can be kept. While, since the water-cooled condenser 5 is arranged in the outlet tank 8, the cooling medium is cooled in a normal condition by the cooling water that has been led into the outlet tank 8 after being cooled by the core portion 6a of the sub-radiator 6, and thus, the cooling efficiency can be increased.

Furthermore, since the proximity sensor 21 is positioned in the vicinity of the fragile portion 80 to detect a breakage of the fragile portion 80 for causing the alarming device to issue an alarm, users can recognize that the cooling medium has leaked into the cooling water. Furthermore, since leakage of any portion of the of the air conditioning cooling circuit AC is detected by the temperature sensor 22 to cause the alarming device to issue an alarm, all kinds of leakage can be recognized by the users. In this case, by changing the alarm between the former and the latter, the users can recognize which leakage has taken place.

Furthermore, since the fragile portion 80 is provided at an upper position of the water-cooled condenser 5, even when the cooling medium of the air conditioning cooling circuit AC leaks, it is possible to continuously cool the cooling medium in the water-cooled condenser 5 by the surrounding cooling water for a time while the cooling medium in the air conditioning cooling circuit AC secures an amount needed for cooling.

Furthermore, the fragile portion 80 is provided at a side surface of the outlet tank 8, and the fragile portion 80 and the opening of the guide member 81 are oriented to the direction of the width of the sub-radiator 6, that is, to direction of the width of an associated motor vehicle. With this arrangement, undesired phenomenon in which the cooling water discharged to the outside through the fragile portion 80 splashes onto auxiliary devices thereby to induce undesired matters can be avoided.

In the above, the present invention is described with reference to several embodiments. However, it is to be noted that the present invention is not limited to such embodiments. That is, modifications that are subjected to a design change without deviating from the concept of the present invention are included in the present invention.

In the above-mentioned embodiment, the integrated cooling system is explained as a type that is mounted to the hybrid motor vehicle. The integrated cooling system of the invention is not limited to such type. That is, the system of the invention can be applied to other one such as an electric vehicle or the like.

The integrated cooling system of the invention is not limited to the air conditioning cooling circuit and high power component cooling circuit of the above-mentioned embodiments. That is, the integrated cooling system of the invention may be of a type in which two cooling circuits through which different cooling mediums flow are provided and one of the cooling circuits shows a pressure higher than that shown by the other cooling circuit.

In the invention, the fragile portion 80 is used as the communicating portion. However, the present invention is not limited to such construction. That is, for example, a relief valve (safety valve) may be used which opens an internal pressure of the outlet tank 8 to the outside when the internal pressure increases to or exceeds a predetermined level.

The first abnormal leakage detecting sensor is not limited to the proximity sensor 21. That is, the detecting sensor may be other means such as a pressure sensor or the like that detects the internal pressure of the outlet tank 8.

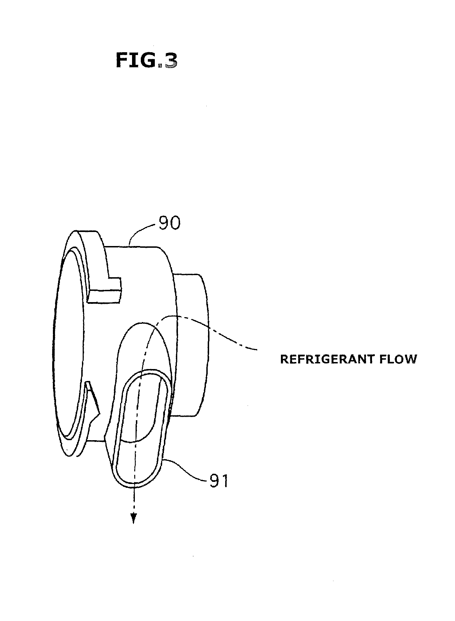

If desired, the guide member 81 may be changed to a guide member 91 shown in Fig. 3 in which a discharging opening 91 is directed toward a front or rear of the vehicle. In this case, only by changing the guide members 81 and 91, it is possible to change the cooling water discharging direction at the time when the cooling medium leaks from the direction of the width of the vehicle to the forward or rearward direction of the vehicle without changing the outlet tank 8 to which the fragile portion 80 is provided. Accordingly, even if other auxiliary devices are provided at a lateral side of the sub-radiator 6, undesired matter in which the cooling water splashes onto the auxiliary devices can be avoided. Furthermore, since such changing is only the changing between the guide members 81 and 91, it is economical. Furthermore, depending on the position of the auxiliary device, it is possible to direct the discharging opening 91 in forward/rearward oblique direction to avoid splashing onto the auxiliary device.

### Description of reference numerals:

- 1: air-cooled condenser
- 2: expansion valve
- 3: evaporator
- 4: compressor
- 5: water-cooled condenser (second heat exchanger)
- 6: sub-radiator (first heat exchanger)
- 6a: core portion
- 7: inlet tank
- 8: outlet tank
- 80: fragile portion
- 81, 91: guide member
- 9: degassing tank
- 10a, 10b: pipe
- 11: overflow tank
- 12-16: flow passage
- 17: discharge pipe
- 21: proximity sensor
- 22: temperature sensor
- 23: controller
- 24: alarming device

## Claims

1. An integrated cooling system **characterized by** having:
a first cooling circuit including a first heat exchanger that cools a first cooling medium by a core portion arranged between an inlet tank and an outlet tank;
a second cooling circuit including a second heat exchanger that is installed in either one of the inlet and outlet tanks to cool a second cooling medium by the first cooling medium, a pressure of the second cooling medium of the second heat exchanger being higher than that of the first cooling medium; and
a communicating portion that is placed below the inlet tank or the outlet tank at a position that can secure in the first cooling circuit a minimum necessary amount of the first cooling medium, the communicating portion being able to permit a communication between an interior of either one of the inlet and outlet tanks and the outside of the same when an internal pressure of the communicating portion becomes to or larger than a predetermined pressure.

2. An integrated cooling system as claimed in Claim 1, which is further **characterized in that** the communicating portion is a relief valve.

3. An integrated cooling system as claimed in Claim 1, which is further **characterized in that** the communicating portion is a fragile portion.

4. An integrated cooling system as claimed in either one of Claims 1 to 3, which is further **characterized in that** the second heat exchanger is placed below the communicating portion.

5. An integrated cooling system as claimed in either one of Claims 1 to 4, which is further **characterized in that** the communicating portion is provided to a side surface of either one of the inlet and outlet tanks in a width direction of the first heat exchanger.

6. An integrated cooling system as claimed in either one of Claims 1 to 5, which is further **characterized in that** either one of the inlet and outlet tanks is provided with a guide member by which a direction in which the first cooling medium is discharged from the communicating portion to the outside is changed.

7. An integrated cooling system as claimed in Claim 1, which is further provided by having:
a first abnormal leakage detecting sensor that detects a leakage of the second cooling medium to the first cooling medium; and
an alarming device that gives the alarm when the abnormal leakage detecting sensor detects an abnormal leakage.

8. An integrated cooling system as claimed in Claim 7, which is further **characterized in that** the alarming device is one of a sound apparatus, a horn and an indicator.

9. An integrated cooling system as claimed in Claim 7 or 8, which is further **characterized by** having a second abnormal leakage detecting sensor that detects a leakage of the second cooling medium from the second cooling circuit, so that the second abnormal leakage detecting sensor detects the leakage of the second cooling medium, an alarm is given from the alarming device.

10. An integrated cooling system as claimed in Claim 9, which is further **characterized in that** the alarm given when the first abnormal leakage detecting sensor detects the leakage and the alarm given when the second abnormal leakage detecting sensor detects the leakage are made different.

11. An integrated cooling system as claimed in either one of Claims 1 to 10, which is further **characterized in that**:
the first cooling circuit is a cooling circuit for high power system components that uses cooling water as the first cooling medium; and
the second cooling circuit is a cooling circuit for air conditioning that uses a cooling medium for air conditioning as the second cooling medium.
